# FASCICULE DE BREVET EUROPEEN

(11) **EP 2 591 387 B1**
(45) Date de publication et mention de la délivrance du brevet: **20.02.2019**
(21) Numéro de dépôt: 11743842.4
(22) Date de dépôt: 08.07.2011
(51) Int. Cl.: G02B 6/02, G02B 6/036, C03B 37/018, H01S 3/094, H01S 3/16, G02B 6/024, H01S 3/067

(54) **FIBRE OPTIQUE DOPEE TERRE RARE RESISTANTE AUX RADIATIONS ET PROCEDE DE DURCISSEMENT AUX RADIATIONS D'UNE FIBRE OPTIQUE DOPEE TERRE RARE**
STRAHLUNGSRESISTENTE SELTENERDDOTIERTE GLASFASER UND VERFAHREN ZUR STRAHLUNGSHÄRTUNG EINER SELTENERDDOTIERTEN GLASFASER
RADIATION-RESISTANT RARE-EARTH-DOPED OPTICAL FIBRE AND METHOD OF RADIATION-HARDENING A RARE-EARTH-DOPED OPTICAL FIBRE

(30) Priorité: 09.07.2010 FR 1055617
(43) Date de publication de la demande: 15.05.2013
(73) Titulaire: IXBLUE, 78160 Marly-le-Roi (FR); Commissariat à l'Énergie Atomique et aux Énergies Alternatives, 75015 Paris (FR)
(72) Inventeur: CADIER, Benoît, 22700 Perros Guirec (FR); LAURENT, Arnaud, 22450 Quemperven (FR); ROBIN, Thierry, 22450 Camlez (FR); GIRARD, Sylvain, 42530 Saint Genest Lerpt (FR); MARCANDELLA, Claude, 91310 Montlhery (FR)
(74) Mandataire: Jacobacci Coralis Harle
(86) Numéro de dépôt international: PCT/FR2011/051635
(87) Numéro de publication internationale: WO 2012/004547

(56) Documents cités:
- WO-A1-01/38244
- WO-A1-2010/065788
- US-A1- 2002 071 455
- US-A1- 2002 126 974
- US-A1- 2002 154 874
- US-A1- 2004 218 653
- M. ENGHOLM, L. NORIN: "Ytterbium-doped fibers co-doped with Cerium; Next generation of fibers for high power fiber lasers?", SPIE, PO BOX 10 BELLINGHAM WA 98227-0010 USA, vol. 7580, 17 février 2010 (2010-02-17), pages 758008-1-758008-9, XP040517586, DOI: 10.1117/12.847928

## Description

La présente invention concerne une fibre optique résistante aux radiations et ses applications dans différents domaines. Plus particulièrement, l'invention concerne une amélioration de la résistance d'une fibre optique dopée terre(s) rare(s) aux radiations, et en particulier aux rayonnements ionisants. L'invention concerne également l'utilisation d'une telle fibre dans des amplificateurs ou lasers à fibre destinés à être utilisés en présence de radiations.

Les fibres optiques ont connu un très fort développement du fait de leurs propriétés de transmission d'informations à haut débit dans des milieux très contraignants (aérien, souterrain, sous-marin). De plus, l'immunité des fibres optiques aux rayonnements électromagnétiques assure la fiabilité des transmissions. Les fibres optiques dites standard ont trouvé des applications dans les télécommunications terrestres et intercontinentales sur de longues distances grâce à leur faible atténuation linéique et leur grande stabilité. Dans les vingt dernières années, les fibres optiques dopées terre rare se sont développées pour des applications dans les amplificateurs à fibre optique ainsi que dans les lasers à fibre.

Cependant, les fibres optiques ne sont pas totalement immunisées vis-à-vis de leur environnement mais sont généralement sensibles à certains facteurs tels que la température, la pression ou encore les radiations telles que les rayonnements ionisants.

Dans le présent document, on entend par radiation un rayonnement électromagnétique ou corpusculaire capable de produire directement ou indirectement des ions, ou de déplacer des atomes lors de son passage à travers les atomes et les molécules de matière. Les sources de radiations peuvent être naturelles (rayonnement cosmique dans l'espace) ou artificielles : rayonnements de photons (rayons X, rayons γ), neutrons, protons, ou ions lourds présents dans les installations nucléaires, dans des instruments scientifiques ou encore dans des appareils médicaux.

L'utilisation de fibres optiques en milieu radiatif présente un intérêt majeur que ce soit dans les domaines du civil, du militaire ou du spatial en raison des nombreux avantages des fibres et notamment leur immunité électromagnétique, leur large bande passante, leur faible poids et faible volume. Les fibres optiques peuvent être utilisées en tant qu'outils de transport de l'information, en tant que capteurs ou d'éléments de diagnostics. Les fibres optiques utilisées en environnement nucléaire peuvent être passives ou actives et, dans ce dernier cas, elles sont généralement dopées et utilisées comme un milieu actif en mode amplification ou laser.

Cependant, il a été observé que l'exposition d'une fibre optique à des radiations induit une dégradation des performances optiques, en particulier une augmentation de l'atténuation linéique de la fibre (dite atténuation induite par irradiation ou encore RIA pour Radiation Induced Atténuation).

De nombreuses études ont été menées sur différents types de fibres optiques pour analyser les effets du RIA, en déterminer les causes et rechercher des traitements permettant d'améliorer la résistance des fibres optiques aux radiations.

D'une part, l'atténuation induite par rayonnement dépend du type de rayonnement, du débit de dose et de la dose totale reçue par une fibre optique. D'autre part, l'atténuation induite par rayonnement dépend fortement de la composition de la fibre et varie notamment selon qu'il s'agit d'une fibre ayant un coeur en silice pure, en silice dopée au phosphore ou encore d'une fibre optique dopée terre rare.

Le brevet US 5,681,365 (Gilliland et al.) décrit un procédé pour améliorer la résistance aux radiations d'une fibre optique à coeur de silice comprenant un dopage du coeur au fluor et/ou l'application d'une tension inférieure à 5 grammes lors du fibrage. La fibre est ensuite exposée à l'une des deux types de sources de radiations suivantes : une source de rayons γ (⁶⁰Co) ayant un débit de dose de ∼100 rad/s pour une dose totale de 1,44 - 1,7 krad (14.4 - 17 Gy) ou une source de cuivre K-alpha de 250 kV produisant une dose totale de 3,8 krad (38 Gy). Selon le brevet US 5,681,365, l'impact positif du dopage au fluor et du fibrage sous faible tension et la synergie entre ces deux facteurs permettent de réduire la RIA à la longueur d'onde de mesure de 1300 nm.

Le brevet US 4,988,162 (Hayami) décrit une fibre optique multi-coeur résistante aux radiations, chacun des coeurs étant en silice pure. Selon ce brevet US 4,988,162 (Hayami), la réduction, dans le coeur de silice, des taux d'impuretés en chlore, en groupes OH et en fluor permet de réduire la RIA dans le domaine du visible lors d'une exposition de la fibre à une source de rayons γ (⁶⁰Co) ayant un débit de dose de 2.10⁴ rad/h (210 Gy/h) et pour une dose totale de 3.10⁵ rad (3,1 kGy/h).

Le brevet US 5,574,820 (Griscom) décrit un procédé de durcissement aux radiations d'une fibre optique à coeur de silice pure. Le procédé comprend une pré-irradiation de la fibre par une source de radiations (γ ou neutrons rapides) à une dose d'au moins 10⁷ rad (soit 10⁵ Gy) pour induire une atténuation permanente dans la fibre de manière à ce qu'une exposition subséquente à une dose de rayonnements n'induise qu'une RIA limitée à au plus 30 dB/km sur le domaine visible (400-700 nm). Le brevet US 5,267,343 (Lyons et al.) décrit un autre procédé de durcissement d'une fibre à coeur de silice ultrapure combinant une hydrogénation puis une pré-irradiation de la fibre par une source de rayonnements γ (⁶⁰Co) à une dose totale allant jusqu'à 10⁶ rad (10⁴ Gy). Selon US 5,267,343, ce procédé permet d'allonger la durée de vie des fibres et procure également une protection dans l'UV. Cependant, l'hydrogénation crée une bande d'absorption dans la bande d'amplification autour de 1.5 µm et/ou dans la bande de pompage.

Les documents WO 01/38244 A1, US 2002/0126974 A1 et WO 2010/065788 A1 décrivent des fibres amplificatrices ayant un coeur dopé ou codopé erbium, ytterbium et cérium.

La publication de D. L. Griscom, E. J. Friebele, K. J. Long, and J. W. Fleming" Fundamental defect centers in glass: Electron spin resonance and optical absorption studies of irradiated phosphorus-doped silica glass and optical fibers", J. Appl. Phys. 54, 3743 (1983) analyse les pics d'absorption optiques induits dans des fibres phosphosilisates par des rayonnements ionisants (source γ(⁶⁰Co) ou rayons X de 50-100 keV). Le défaut de type P₁ est corrélé une absorption induite à 0,8 eV (∼1550 nm).

De même, la publication de S. Girard, J. Keurinck, A. Boukenter, J-P. Meunier, Y. Ouerdane, B. Azaïs, P. Charre et M. Vié, Nucl. Instr. and Methods in Physics Res. Sec. B, Vol. 215, n° 1-2, p. 187-195, 2004, compare la RIA dans différents types de fibres à coeur de silice pure, dopée germanium, azote et codopée phosphore. Selon cette étude, le codopage au phosphore est responsable des niveaux de RIA permanents les plus élevés après irradiation soit par une source de rayonnements γ soit par une source de rayons X puisés. L'influence prépondérante du phosphore sur la RIA est attribuée à la formation de centres colorés permanents du phosphore de type POHC (phosphorous oxygen hole center) et P₁ ayant une bande d'absorption autour de 1600 nm.

La forte sensibilité des fibres à coeur de silice dopée phosphore aux radiations a été mise à profit pour la réalisation de dosimètres de rayonnement. Ainsi la publication M.C. Paul, D. Bohra, A. Dhar, R. Sen, P.K. Bhatnagar, K. Dasgupta, "Radiation response behavior of high phosphorous doped step-index multimode optical fibers under low dose gamma irradiation", Journal of Non-Crystalline Solids 355 p. 1496-1507 (2009), montre qu'une fibre dopée phosphore présente dans le domaine de 500-600nm une absorption quasi-linéaire en fonction de la dose de rayonnement d'une source ⁶⁰Co pour de faibles doses comprises entre 0.1 et 100 rad (0.001 et 1.0 Gy). De plus, la sensibilité des fibres croît avec le taux de phosphore.

La publication H. Henschel, M. K. Orferb, J. Kuhnhenn, U. Weinand, F. Wulf, Nuclear Instruments and Methods in Physics Research A 526 (2004) 537-550, décrit l'utilisation d'une fibre optique dopée phosphore comme détecteur de rayonnements dans un accélérateur de particules par une mesure de réflectométrie dans le visible (670, 865 nm) ou le proche IR (1300 nm.). La mesure de réflectométrie optique dans le domaine temporel (OTDR) permet d'obtenir un système de dosimétrie distribué le long de l'accélérateur. Par ailleurs, la publication Henschel *et al*. indique que les fibres optiques actives dopées terre rare sont extrêmement sensibles aux rayonnements ionisants.

Parmi les fibres actives, la fibre dopée à l'erbium est d'intérêt majeur. En effet, les fibres dopées erbium permettent de réaliser des amplificateurs ou des lasers ayant une longueur d'onde d'émission située aux alentours de 1500 nm, communément appelée la troisième bande télécom. Les fibres dopées erbium entrent également dans la fabrication de sources large bande dites « ASE », d'amplificateurs de télécommunication de type EDFA et de laser fibrés qui sont utilisés par exemple pour des applications de télécommunication en espace libre ou pour réaliser des LIDAR.

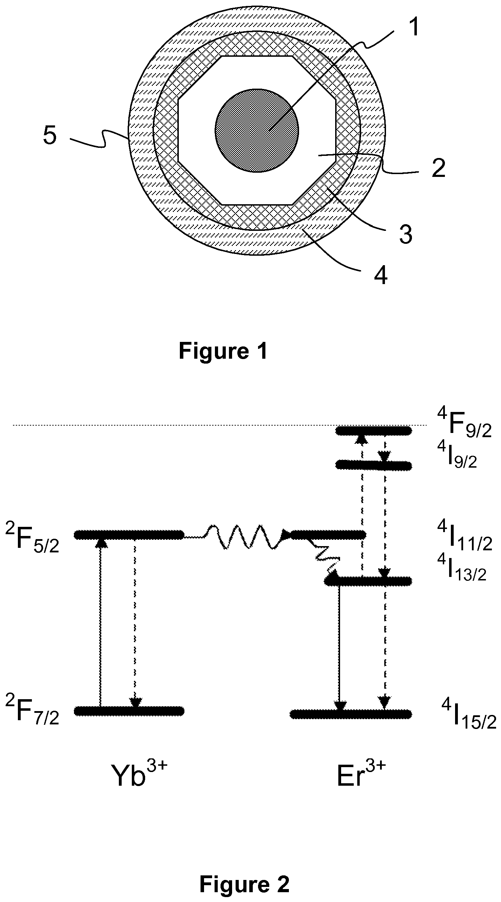

Le plus souvent le coeur d'une fibre de silice dopée erbium est codopé au germanium voire avec de l'aluminium. Une branche particulière des fibres dopées erbium est la branche des fibres codopées erbium-ytterbium. Ces fibres sont une alternative aux fibres simplement dopées erbium plus particulièrement pour les applications à fortes puissances. La figure 1 représente une vue en coupe d'une fibre optique double gaine. La fibre optique 5 comprend un coeur 1 dopé terre rare, entouré d'une première gaine 2 guide de pompe, elle-même entourée d'une deuxième gaine 3. La fibre 5 comprend un revêtement extérieur 4 de protection.

La figure 2 représente les différents niveaux d'énergie des ions ytterbium et erbium dans un matériau codopé erbium-ytterbium. Dans une fibre codopée erbium-ytterbium, l'ion erbium est excité, non pas directement par une pompe monomode à 976 nm sur le niveau ⁴I_{11/2} de l'erbium, mais indirectement via un pompage multimode dans la bande d'absorption entre 900 et 980 nm des ions ytterbium, soit sur leur niveau ²F_{7/2} → ²F_{5/2}. Les ions ytterbium transfèrent ensuite leur énergie aux ions erbium via des transferts de type phonons. Or, l'énergie de phonon de la liaison P=O (phosphore-oxygène) est idéalement adaptée à ce transfert énergétique. Pour améliorer le transfert énergétique entre l'ytterbium et l'erbium, le coeur d'une fibre optique en silice codopée erbium et ytterbium est réalisé classiquement avec un dopage phosphore. Le phosphore est alors utilisé à la fois pour augmenter l'indice de réfraction de coeur et pour remplir la fonction de transfert énergétique entre les terres rares. L'utilisation d'une matrice phosphosilicate dans le coeur de la fibre, plutôt qu'une matrice de silice pure, a également pour effet indirect d'augmenter la durée de vie du niveau ²F_{5/2} de l'ion Yb³⁺, ce qui limite l'émission à 1 µm de cette terre rare, et de réduire la durée de vie du niveau ⁴I_{13/2} de l'Er³⁺ ce qui limite le phénomène de transfert inverse.

Cependant, comme indiqué plus haut, le phosphore est un dopant de la silice connu pour impacter très fortement la tenue aux radiations des fibres optiques à base de silice. En effet, la présence de phosphore induit une forte sensibilité de la fibre optique aux radiations, se traduisant par un niveau excessivement élevé de l'atténuation induite durant l'irradiation et par une absence de recouvrement des capacités de transmission de la fibre optique après irradiation contrairement à la plupart des autres types de fibres optiques. Cette forte sensibilité est particulièrement marquée dans l'infrarouge à cause de la génération d'un défaut relatif au phosphore, le centre P₁ qui possède une bande d'absorption centrée autour de 1600 nm, très proche de la troisième fenêtre Télécom. De plus, la concentration en défauts augmente même après la fin de l'irradiation à cause de la conversion thermique d'autres défauts en défauts P₁.

Par conséquent, l'élément phosphore est généralement banni tant dans le coeur que dans la gaine optique de toute fibre optique dopée terre rare destinée à être utilisée comme source laser ou amplificateur optique dans un environnement radiatif. Les fibres double gaine codopées erbium-ytterbium en matrice phosphosilicate sont donc usuellement proscrites en milieu radiatif, leur grande sensibilité aux radiations dans la troisième bande Télécom (aux alentours de 1,5 µm) étant principalement associée à la présence des défauts phosphore.

Cette sensibilité des fibres optiques dopées terre rare et/ou phosphore aux radiations empêche l'utilisation des fibres pour des applications de transmission, d'amplification ou d'émission laser dans les milieux où les rayonnements ionisants sont présents naturellement (par exemple dans l'espace) ou produits (environnement de réacteur nucléaire). En effet, les performances des amplificateurs à fibre ou des lasers à fibre sont susceptibles de se dégrader très rapidement en fonction de la dose de rayonnement reçu.

L'atténuation induite par radiation n'est que partiellement réversible au cours du temps, par des procédés de blanchiment thermique ou de photo-blanchiment. Toutefois, dans certains environnements, comme le domaine spatial, les radiations sont permanentes et les procédés de blanchiment irréalisables.

De très nombreux travaux ont été effectués dans le but d'améliorer la résistance des fibres optiques aux radiations. On entend ici par résistance aux radiations, appliqué à une fibre optique, la résistance d'une fibre à une augmentation de son atténuation linéique lors de son exposition à des radiations telles que des rayons X, des neutrons, des rayons gamma ou autres. De manière générale, la résistance aux radiations peut être mesurée par l'atténuation induite par l'exposition aux radiations, par le taux de récupération, ou par le temps nécessaire pour une récupération partielle ou totale.

Il existe un besoin pour des amplificateurs ou des lasers à fibre fonctionnant dans la 3^{ème} bande de télécommunications (∼1.5 µm) et résistants aux radiations, c'est-à-dire présentant une faible atténuation induite par radiation. Il est par exemple souhaitable de faire fonctionner des amplificateurs optiques ou des lasers à fibre dans des systèmes optiques installés dans un environnement nucléaire ou spatial. Il existe donc un besoin de réaliser une fibre optique dopée terre rare résistante aux radiations.

La présente invention a pour but de remédier à ces inconvénients et concerne plus particulièrement une fibre optique résistante aux radiations comprenant au moins un coeur et au moins une première gaine entourant ledit coeur. Selon l'invention, ledit coeur comprend une matrice de phosphosilicate ledit coeur étant dopé terre rare choisi parmi l'erbium, l'ytterbium, le néodyme, le thulium ou codopé erbium-ytterbium ou codopé thulium-holmium et ledit coeur est codopé au cérium.

Selon divers modes de réalisations particuliers de l'invention :
- le coeur est dopé erbium ou codopé erbium-ytterbium et le rapport entre la concentration en erbium et la concentration en cerium (Er/Ce) dans le coeur de la fibre est compris entre 0.05 et 50 ;
- le coeur de la fibre est codopé erbium-ytterbium et le rapport des concentrations Yb/Er dans le coeur de la fibre est compris entre 5 et 50 ;
- la concentration en erbium est comprise entre 100 et 1000 ppm la concentration en ytterbium est comprise entre 500 et 10000 ppm la concentration en phosphore est comprise entre 2 et 10 % atomique, et la concentration en cerium est comprise entre 500 et 10000 ppm ;
- la fibre comprend une deuxième gaine entourant la première gaine ;
- le coeur comprend en outre de l'hydrogène et/ou du fluor ;
- la fibre est une fibre polarisante ou à maintien de polarisation ;
- la fibre est une fibre microstructurée ou une fibre à couches photoniques comprenant une gaine de capillaires creux ;
- la fibre comprend une structure à bande interdite ;
- la fibre est une fibre à large taille de mode.

L'invention concerne également un amplificateur à fibre optique résistant aux radiations comprenant une fibre optique selon l'un des modes de réalisations décrits.

L'invention concerne également un laser à fibre résistant aux radiations comprenant une fibre optique selon l'un des modes de réalisations décrits.

L'invention concerne aussi un procédé de durcissement aux radiations d'une fibre optique comprenant un coeur à matrice de phospho-silicate , ledit coeur étant dopé terre-rare choisi parmi l'erbium, l'ytterbium, le néodyme, le thulium ou codopé erbium-ytterbium ou codopé thulium-holmium. Selon l'invention, le procédé de durcissement comprend une étape de codopage au cerium dudit coeur de la fibre optique.

Selon des modes de réalisation particuliers du procédé de l'invention, le procédé comporte en outre la ou les étapes suivantes, appliquées seules ou combinées entre elles :
- co-dopage au fluor du coeur et/ou de la gaine de ladite fibre ;
- hydrogénation de ladite fibre optique.

L'invention concerne également un procédé pour fabriquer un dispositif optique actif résistant aux radiations utilisant une fibre optique dopée terre-rare comprenant un coeur ayant une matrice de phosphosilicate ledit coeur étant dopé terre rare choisi parmi l'erbium, l'ytterbium, le néodyme, le thulium ou codopé erbium-ytterbium ou codopé thulium-holmium. Selon l'invention, ledit coeur est codopé au cerium de manière à ce que ladite fibre présente une résistance accrue aux radiations.

Selon un mode de réalisation particulier, le procédé de l'invention concerne la fabrication d'un dispositif optique choisi parmi : un amplificateur à fibre optique dopée terre rare, un laser à fibre, une source large bande.

L'invention trouvera une application particulièrement avantageuse dans la fabrication de sources laser, d'amplificateurs optiques destinés à être utilisés dans un environnement radiatif. L'invention ouvre tout particulièrement la voie à une utilisation dans l'espace de fibres dopées terre rare et notamment à la réalisation de LIDAR et de télécommunication inter-satellitaire basées sur ces fibres optiques résistantes aux radiations.

La présente invention concerne également les caractéristiques qui ressortiront au cours de la description qui va suivre et qui devront être considérées isolément ou selon toutes leurs combinaisons techniquement possibles.

Cette description, donnée à titre d'exemple non limitatif, fera mieux comprendre comment l'invention peut être réalisée en référence aux dessins annexés sur lesquels :
- la figure 1 représente une vue en coupe d'une fibre optique ;
- la figure 2 représente un diagramme des niveaux d'énergie des ions Erbium et Ytterbium et des transferts énergétiques entre les différents niveaux d'énergie ;
- la figure 3 représente un profil d'indice d'une préforme destinée à la fabrication d'une fibre double gaine erbium/ytterbium durcie aux radiations ;
- la figure 4 représente un schéma de principe de la mesure des effets de l'irradiation de la fibre optique Er/Yb sur les caractéristiques d'un amplificateur par une mesure en ligne de l'évolution de la puissance en sortie de l'amplificateur sous irradiation (mesure spectrale et de puissance) ;
- la figure 5 représente l'évolution du courant de sortie en fonction du courant de la diode de pompe pour un amplificateur utilisant une fibre I sans codopage au cerium ;
- la figure 6 représente l'évolution du courant de sortie en fonction du courant de la diode de pompe pour un amplificateur utilisant une fibre J codopée au cérium ;
- la figure 7 représente l'évolution de la puissance de sortie de l'amplificateur lors de l'irradiation respectivement pour les fibres optiques I et J à température ambiante (débit de dose de 1 krad/h ou 10Gy/h) ainsi que pour une fibre Jh codopée au cérium et hydrogénée.

Nous décrivons tout d'abord un procédé de réalisation d'une fibre optique selon un mode de réalisation préféré de l'invention où le coeur de la fibre est codopé erbium-ytterbium.

Une préforme est réalisée par la technique MCVD et plus particulièrement par une variante de cette technique appelée dopage en solution. Un poreux est réalisé dans un tube de dépôt qui est généralement un tube de silice pure. Le poreux est composé principalement de silice et de phosphore, mais d'autres éléments peuvent être incorporés. Ce poreux est mis en présence d'une solution aqueuse contenant les éléments suivants sous forme de sels : ErCl₃, YbCl₃ et CeCl₃. Cette solution est en base aqueuse, mais d'autres solutions, notamment alcooliques peuvent être envisagées. Une fois la solution retirée du tube, le poreux est séché puis vitrifié sur le banc CVD enfin la préforme est fermée de façon à produire une préforme pleine contenant un coeur phosphosilicate dopé avec les terres rares erbium (Er), ytterbium (Yb) et cérium (Ce). Cette liste de co-dopants du coeur n'est pas restrictive et d'autres éléments connus peuvent être ajoutés selon les applications souhaitées.

D'autres techniques de fabrication du coeur et/ou de la préforme sont possibles telles que l'utilisation de chelates, de nanoparticules, de techniques VAD (Vapor Axial Déposition), OVD (Outside Vapor Déposition), PCVD (Plasma Chemical Vapor Déposition), sol/gel etc.

La préforme obtenue est ensuite mise en forme par des techniques verrières classiques afin d'obtenir le rapport homothétique coeur/gaine souhaité. La géométrie de la préforme peut être modifiée de façon à obtenir un brouillage efficace de la pompe multimode. On peut par exemple réaliser une gaine de section octogonale ou pseudo octogonale, hexagonale, à un plat, à deux plats, etc.

Une seconde gaine peut être formée en rechargeant ou en manchonnant la préforme primaire avec de la silice fluorée. Cette structure permet d'obtenir une fibre double gaine « tout verre ». Une gaine en silice fluorée présente généralement une ouverture numérique (ON) comprise entre 0.22 à 0.30 maximum. On peut aussi former une seconde gaine à partir d'un polymère bas indice, ce qui permet d'obtenir une ON typiquement supérieure à 0.40. Toutefois, une seconde gaine fluorée est particulièrement intérressante pour les applications de durcissement, car la silice fluorée vieillit mieux que les polymères.

La préforme est ensuite fibrée en utilisant éventuellement un revêtement plastique de type acrylate, silicone, etc dont la principale qualité est d'avoir un indice de réfraction particulièrement bas par rapport à la silice (ou une ouverture numérique forte par exemple > 0.4).

On obtient une fibre 5 double gaine comprenant un coeur 1 comprenant de la silice dopée au phosphore, co-dopée erbium-ytterbium et co-dopée cérium.

La teneur en phosphore dans le coeur 1 est par exemple supérieure à 4% atomique et si possible supérieure à 6 % et idéalement supérieure à 8% pour permettre la dilution des ions terre rare et améliorer l'efficacité de pompage.

Les absorptions des ions Erbium et Ytterbium mesurées dans le coeur avant une irradiation sont respectivement de l'ordre de :
- 5 à 100 dB/m à la longueur d'onde proche de 1530 nm.
- 100 à 2500 dB/m à la longueur proche de 976 nm.
- Le ratio atomique Yb/Er dans le coeur peut être de 5 à 50 mais idéalement de 12 à 25.
- Le cérium est ajouté de telle sorte que le ratio des concentrations Yb/Ce soit compris entre 0.1 et 10.

Selon un mode de réalisation préféré de l'invention, dont nous présentons plus loin les mesures sous exposition à des radiations, la composition de la fibre est la suivante :
- Concentration en Phosphore dans le coeur : 8 % atomique
- Ratio Yb/Er : 21
- Ratio Ce/Er : 10
- Diamètre de coeur dopé : 6 µm
- Ouverture numérique du coeur dopé : 0.19
- Diamètre moyen de l'octogone 130 µm de la première gaine ;
- Ouverture numérique de la gaine multimode : > 0.46
- Absorption maximale de l'Erbium vers 1536nm avant irradiation : 30 dB/m
- Absorption multimode de la fibre double gaine vers 915 nm avant irradiation : 0.8 dB/m

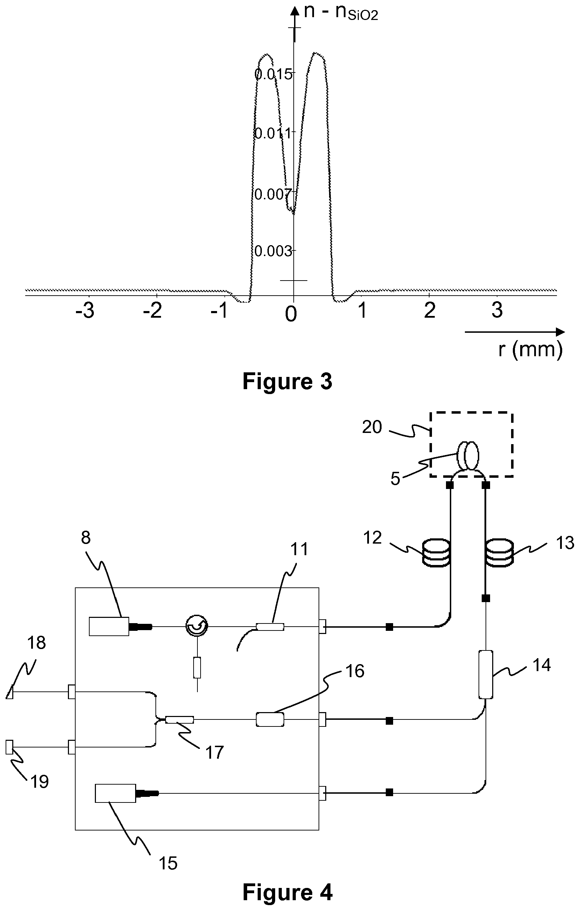

Le profil d'indice de la préforme à la base de cette fibre optique est représenté à la figure 3. On a représenté un profil d'indice de réfraction relatif par rapport à la silice pure (n_{SiO2}).

D'autres fibres optiques dopées terre rare peuvent être fabriquées avec des valeurs numériques différentes de celles indiquées plus haut tout en restant dans le cadre de l'invention. En particulier, le coeur de la fibre peut être dopé d'une terre rare choisie parmi l'erbium, l'ytterbium, le thulium ou le néodyme, ou codopé d'un couple de terres rares erbium-ytterbium ou thulium-holmium.

Nous avons réalisé des mesures respectivement sur une fibre codopée erbium, ytterbium sans cerium (fibre I) et sur une fibre selon l'invention codopée erbium, ytterbium et cerium (fibre J) en mode amplificateur, sous flux de pompes et pendant l'exposition à une source de Cobalt 60 (photons gamma de 1.2 MeV, débit de dose de l'ordre de 1 krad/h soit 10 Gy/h).

La figure 4 représente un dispositif de mesure des performances d'une fibre optique 5 placée dans une enceinte 20 exposée à une source de rayonnements ionisants pendant le fonctionnement en mode amplificateur de ladite fibre 5. La fibre optique 5 à tester est fusionnée à chaque extrémité à une fibre optique respectivement 12 et 13. Une source 8 à 1545 nm est couplée à l'entrée de la fibre SMF 12. Un multiplexeur 11 permet de coupler une pompe à 980 nm également à la fibre 12. Une seconde fibre 13 est couplée à l'autre extrémité de la fibre optique codopée 5. Une pompe 15 multimode est couplée à une autre extrémité de la fibre 13. Un coupleur de sortie 14 permet de transmettre le signal amplifié par un ampli 16 en direction d'un diviseur 17 qui répartit le signal entre une sphère intégrante 18 et un analyseur de spectre optique (OSA) 19. La fibre 5 est placée dans une enceinte 20 où elle est soumise au rayonnement d'une source ⁶⁰Co de rayons γ pendant son fonctionnement en tant qu'amplificateur optique. Seule la fibre 5 est exposée aux radiations de la source de ⁶⁰Co.

La sensibilité aux radiations de cette fibre optique durcie a été évaluée auprès d'une source ⁶⁰Co (photons gamma de 1.2 MeV, débit de dose de 1 krad/h (10 Gy/h), température ambiante, doses inférieures à 100 krad (1 kGy)). Comme il a été montré que les réponses mesurées pour les fibres optiques dopées sous irradiation gamma sont représentatives de leurs réponses sous irradiations continues aux protons, neutrons (S. Girard, J. Baggio, and J. Bisutti, "14-MeV Neutron, gamma-ray, and Pulsed X-Ray Radiation-Induced Effects on Multimode Silica-Based Optical Fibers", IEEE Transactions on Nuclear Sciences, vol. 53, n°6, pp. 3750-3757, 2006 et Todd S. Rose, Deana Gunn and George C. Valley, "Gamma and Proton Radiation Effects in Erbium-Doped Fiber Amplifiers: Active and Passive Measurements", IEEE Journal of Lightwave Technology, Vol. 19, Issue 12, pp. 1918- (2001)), la fibre testée est également résistante à ces différents types d'irradiations.

Le banc de mesure utilisé pour la caractérisation de la réponse des deux fibres optiques sous irradiation gamma est détaillé à la figure 4. La fibre active 5, constituant de base de l'amplificateur optique, est installée dans une zone d'irradiation 20 face au flux de photons gamma incident. Le reste de l'amplificateur est déporté dans une baie de mesure grâce à deux fibres optiques de déport 12 et 13 de 30 m de long vers une zone dite zone d'instrumentation, protégée des radiations. Le banc de test est constitué d'une baie dans laquelle est intégré l'ensemble des équipements de contrôle, à savoir :
- Les alimentations de la source 8 DFB et de la diode de pompe.
- Équipements de mesure, analyseur de spectre optique 19, sphère intégratrice 18
- Bench-top contenant l'assemblage optique actif et passif de l'amplificateur
- Combineurs de pompe 11, 14
- PC avec programme automatique de test et d'acquisition.

Une fibre 5 est assemblée aux fibres de déport 12, 13 et à un combineur de pompe 11, 14 sous forme d'un banc facilement manipulable. Ce banc permet de caractériser la puissance optique P (W) et le spectre en énergie du signal amplifié à 1545 nm pour différentes valeurs de pompe de la fibre active (courant entre 0 et 7 A) avant, lors d'une irradiation gamma et après cette irradiation. Il est donc possible de caractériser par ce banc de mesure la dégradation de l'amplificateur liée à la sensibilité de la fibre active sous irradiation.

Deux amplificateurs ont été réalisés, le premier utilisant une fibre Erbium-Ytterbium en matrice phosphosilicate sans cérium (Fibre I) et , le second utilisant une fibre optique Erbium - Ytterbium en matrice phosphosilicate contenant du cérium (Fibre J). Chacune des fibres respectivement sans codopage au cerium (fibre I) et avec codopage au cerium (Fibre J) est testée individuellement sur l'appareil de mesure représenté figure 4.

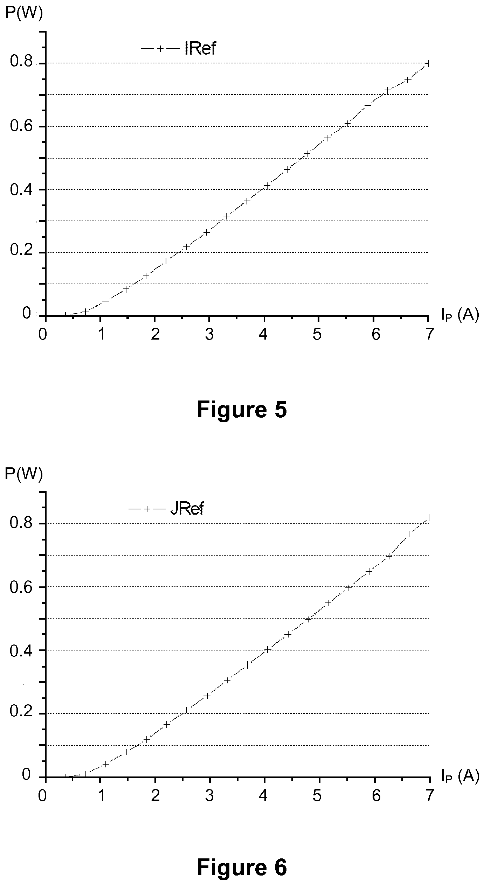

La figure 5 représente l'évolution de la puissance de sortie à 1545 nm en fonction du courant de la diode de pompe pour un amplificateur utilisant une fibre I sans codopage au cerium et avant irradiation par la source de ⁶⁰Co. Dans des conditions similaires, la figure 6 représente l'évolution de la puissance de sortie à 1545 nm en fonction du courant de la diode de pompe pour un amplificateur utilisant une fibre J codopée au cerium et avant irradiation par la source de ⁶⁰Co. Ces mesures de puissance ont été mesurées via la sphère intégratrice.

La comparaison des figures 5 et 6 indique que les caractéristiques des deux amplificateurs (utilisant respectivement la fibre I_{ref} et la fibre J_{ref}) sont très proches avant exposition à une source de radiations. L'ajout de cérium dans la fibre J n'affecte donc pas les performances optiques hors irradiation de l'amplificateur optique.

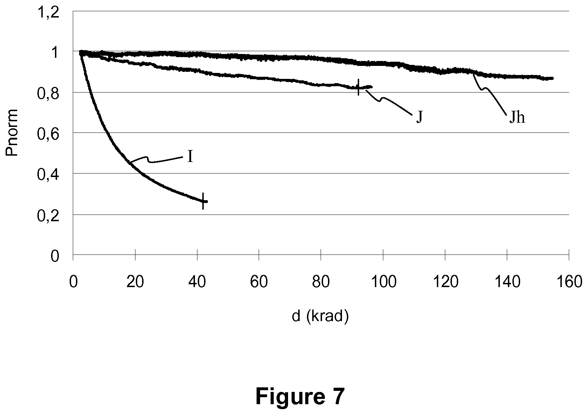

La figure 7 représente une mesure de la puissance de sortie à 1545 nm en sortie de chacun des deux amplificateurs (utilisant respectivement la fibre I et la fibre J) en fonction de la durée d'exposition de la fibre 5 à une dose de rayonnements de la source de ⁶⁰Co, respectivement pour la fibre I et pour la fibre J. La figure 7 représente une mesure de la puissance de sortie à 1545 nm en sortie d'un amplificateur utilisant une fibre Jh codopée au cérium ayant une structure et une composition similaires à la fibre J, la fibre Jh étant de plus hydrogénée. La puissance de sortie de chaque amplificateur est ici normalisée relativement à la puissance initiale avant le début de l'exposition aux radiations (puissance normalisée à 1 pour une dose nulle de rayonnements). La fibre I est exposée à la source de ⁶⁰CO jusqu'à une dose de 40 krad, puis l'exposition de la fibre est stoppée mais la mesure se poursuit pendant quelques temps encore. La fibre J est exposée à la source de ⁶⁰CO jusqu'à une dose de 90 krad (900 Gy), puis l'exposition de la fibre J est stoppée et la mesure se poursuit pendant quelque temps. La fibre Jh est exposée à la source de ⁶⁰CO jusqu'à une dose d'environ 160 krad.

Sous irradiation, des défauts sont générés à l'échelle microscopique dans la silice dopée constituant la fibre optique. La génération de ces défauts à l'échelle atomique résulte à l'échelle macroscopique en une diminution du signal émis à 1545 nm, illustrée sur la figure 7 respectivement pour les deux fibres optiques (fibre I et fibre J).

Toutefois, on observe sur la figure 7 une dégradation de la puissance optique de sortie de l'amplificateur pour une fibre classique (fibre I), cette dégradation étant telle que l'on peut pratiquement parler d'extinction du signal émis. En revanche, la dégradation de l'amplificateur utilisant la fibre J codopée au cérium est limitée à moins de 20% de la puissance initiale pour l'équivalent en dose totale de la durée d'une mission spatiale classique (> 80 krad(SiO₂) soit 800 Gy). La dégradation de l'amplificateur utilisant la fibre Jh codopée au cérium et hydrogénée est encore considérablement réduite par rapport à la fibre J.

La figure 7 montre donc clairement une amélioration de la tenue de la fibre optique J sous irradiation grâce à l'addition de cérium dans le coeur de la fibre optique. Après une dose de 40 krad (400 Gy), la puissance à 1545nm a diminuée d'environ 80% dans la fibre I de référence et uniquement de moins de 20% dans le cas de la fibre J codopée au cérium après une dose déposée supérieure à 80 krad (800 Gy) qui excède la plupart des doses rencontrées pour les applications spatiales. La figure 7 montre une amélioration considérable de la tenue de la fibre optique Jh sous irradiation grâce aux effets combinés de l'hydrogénation et de l'addition de cérium dans le coeur de la fibre optique.

En outre, sur la figure 7, on observe l'évolution des fibres I et J après l'arrêt de l'exposition aux rayonnements ionisants (arrêt représenté par un petit trait vertical pointillé sur chaque courbe), c'est-à-dire respectivement après 40 krad (400 Gy) pour la fibre I et après 90 krad (900 Gy) pour la fibre J. Après arrêt de l'irradiation de la fibre I, le niveau de la puissance optique mesurée semble constant ce qui semble indiquer des défauts permanents dans la fibre I. Au contraire, après arrêt de l'irradiation de la fibre J, le niveau de la puissance optique mesurée présente une légère inflexion, ce qui semble indiquer un début de blanchiment des défauts dans cette fibre J et donc un recouvrement partiel de sa capacité de transmission.

Pour autant, l'effet d'amélioration de la résistance aux radiations d'une fibre optique J à coeur de phosphosilicate dopée erbium et codopée cerium est un effet nouvellement mis en évidence par la présente invention et dont les mécanismes physiques sous-jacents à cet effet ne sont pas expliqués. Cet effet n'était nullement prévisible. Au contraire, se basant sur l'abondante littérature de l'art antérieur, l'homme du métier ne s'attend pas à ce qu'un codopage au cerium du coeur d'une fibre optique comprenant du phosphore et de l'erbium conduise à une fibre plus résistante aux rayonnements ionisants qu'une fibre sans codopage cerium.

L'invention concerne donc également un procédé de durcissement aux radiations d'une fibre optique dopée erbium ou codopée erbium-ytterbium en matrice de phosphosilicate comprenant une étape de codopage du coeur de ladite fibre au cerium. Le codopage est de préférence réalisé lors de la fabrication du coeur de la préforme de la fibre.

L'invention permet ainsi de fabriquer un dispositif optique actif à fibre optique résistant aux radiations utilisant une fibre optique selon l'un des modes de réalisation décrits dans le présent document.

Les propriétés de durcissement aux radiations décrites dans le présent document permettent d'envisager la production de fibres de structures différentes pour applications en milieu radiatif (nucléaire civil, militaire, physique des hautes énergies) et notamment en structure de type :
- Double gaine Air-Clad afin de renforcer encore la tenue aux radiations de la fibre optique. La gaine de bas indice de type silicone ou acrylate est remplacée par une rangée de capillaires formant une couche d'air autour de la partie multimode de la fibre optique ;
- Fibre microstructurée contenant des portions de coeur dopées avec le matériau durci décrit précédemment, notamment fibres dites « photonic bandgap fibers » ;
- Fibres à maintien de polarisation ou polarisante ;
- Fibre à large taille de mode ;
- Fibre comprenant une structure dite « à bande interdite ».

Tout autre type de fibre optique destiné à réaliser un laser ou un amplificateur optique dans la bande autour de 1.5 µm de l'Erbium et fonctionnant en en présence de radiations entre également dans le cadre de l'invention.

En particulier, selon un mode de réalisation particulier de l'invention, on effectue une hydrogénation de la fibre pour renforcer l'effet de durcissement aux radiations.

Selon un mode de réalisation particulier de l'invention, qui peut être utilisé seul ou en combinaison avec l'hydrogénation, on effectue un co-dopage du coeur et/ou de la gaine de la fibre renforcer l'effet de durcissement aux radiations de la fibre selon l'un des modes de réalisation quelconques décrits plus haut.

L'invention permet une amélioration de la résistance aux radiations des fibres, en particulier pour une fibre Erbium Ytterbium en matrice phospho-silicate par l'ajout de cérium dans la composition du coeur.

La fibre optique dopée terre rare de l'invention présente une résistance accrue aux radiations. L'atténuation induite par irradiation dans la fibre de l'invention reste inférieure à l'atténuation induite par irradiation dans une fibre dopée terre rare sans codopant cerium. De plus, la fibre optique de l'invention est également tolérante à des rayonnements non strictement ionisants tels que neutrons ou protons.

## Revendications

1. Fibre optique résistante aux radiations de type rayonnements ionisants comprenant :
- au moins un coeur (1) et
- au moins une première gaine (2) entourant ledit coeur (1),
**caractérisée en ce que** :
- ledit coeur (1) comprend une matrice de phosphosilicate, la concentration en phosphore est comprise entre 2 et 10 % atomique,
- ledit coeur (1) est codopé erbium-ytterbium, la concentration en erbium étant comprise entre 100 et 1000 ppm, la concentration en ytterbium étant comprise entre 500 et 10000 ppm et le rapport des concentrations Yb/Er dans le coeur de la fibre étant compris entre 5 et 50,
et **en ce que**
- ledit coeur (1) est codopé au cérium, la concentration en cerium est comprise entre 500 et 10000 ppm, et le rapport entre la concentration en erbium et la concentration en cerium (Er/Ce) dans le coeur de la fibre est compris entre 0.05 et 50.

2. Fibre optique selon la revendication 1 **caractérisée en ce que** la fibre comprend une deuxième gaine (3) entourant la première gaine (2).

3. Fibre optique selon l'une des revendications 1 à 2 **caractérisée en ce que** le coeur (1) comprend en outre de l'hydrogène et/ou du fluor.

4. Fibre optique selon l'une des revendications 1 à 3 **caractérisée en ce que** la fibre est une fibre polarisante ou à maintien de polarisation.

5. Fibre optique selon l'une des revendications 1 à 4 **caractérisée en ce que** la fibre est une fibre microstructurée ou une fibre à couches photoniques comprenant une gaine de capillaires creux ou la fibre comprend une structure à bande interdite, ou la fibre est à large taille de mode.

6. Amplificateur à fibre optique résistant aux radiations comprenant une fibre optique selon l'une des revendications 1 à 5.

7. Laser à fibre résistant aux radiations comprenant une fibre optique selon l'une des revendications 1 à 5.

8. Procédé de durcissement aux radiations d'une fibre optique comprenant un coeur à matrice de phospho-silicate, ledit coeur étant codopé erbium-ytterbium, la concentration en erbium étant comprise entre 100 et 1000 ppm, la concentration en ytterbium étant comprise entre 500 et 10000 ppm et le rapport des concentrations Yb/Er dans le coeur de la fibre est compris entre 5 et 50 **caractérisé en ce que**, la concentration en phosphore est comprise entre 2 et 10 % atomique, et **en ce qu'**il comprend une étape de codopage au cerium dudit coeur de la fibre, la concentration en cerium est comprise entre 500 et 10000 ppm et le rapport entre la concentration en erbium et la concentration en cerium (Er/Ce) dans le coeur de la fibre est compris entre 0.05 et 50.

9. Procédé selon la revendication 8 **caractérisé en ce qu'**il comprend une étape supplémentaire de co-dopage au fluor du coeur (1) et/ou de la gaine (2, 3) de ladite fibre.

10. Procédé selon l'une des revendications 8 ou 9 **caractérisé en ce qu'**il comprend une étape supplémentaire d'hydrogénation de ladite fibre optique.

11. Procédé pour fabriquer un dispositif optique actif résistant aux radiations utilisant une fibre optique selon l'une des revendications 1 à 5.

12. Procédé selon la revendication 11 **caractérisé en ce que** ledit dispositif optique est choisi parmi un amplificateur à fibre optique dopée terre rare, un laser à fibre, une source large bande.

## Patentansprüche

1. Glasfaser, die gegen Strahlungen vom Typ ionisierender Strahlen resistent ist, mit
- wenigstens einem Kern (1) und
- wenigstens einer den Kern (1) umgebenden ersten Hülle (2),
**dadurch gekennzeichnet, daß**
- der Kern (1) eine Phosphorsilikat-Matrix aufweist, wobei die Phosphorkonzentration zwischen 2 und 10 Atomprozent beträgt,
- der Kern (1) Erbium-Ytterbium-dotiert ist, wobei die Erbiumkonzentration zwischen 100 und 1000 ppm, die Ytterbiumkonzentration zwischen 500 und 10000 ppm und das Konzentrationsverhältnis Yb/Er im Kern der Faser zwischen 5 und 50 beträgt,
und daß
- der Kern (1) mit Cer kodotiert ist, wobei die Cerkonzentration zwischen 500 und 10000 ppm und das Verhältnis von Erbiumkonzentration zu Cerkonzentration (Er/Ce) im Kern der Faser zwischen 0,05 und 50 beträgt.

2. Glasfaser gemäß Anspruch 1, **dadurch gekennzeichnet, daß** die Faser eine die erste Hülle (2) umgebende zweite Hülle (3) aufweist.

3. Glasfaser gemäß einem der Ansprüche 1 bis 2, **dadurch gekennzeichnet, daß** der Kern (1) außerdem Wasserstoff und/oder Fluor aufweist.

4. Glasfaser gemäß einem der Ansprüche 1 bis 3, **dadurch gekennzeichnet, daß** die Faser eine polarisierende oder eine polarisationserhaltende Faser ist.

5. Glasfaser gemäß einem der Ansprüche 1 bis 4, **dadurch gekennzeichnet, daß** die Faser eine mikrostrukturierte Faser oder eine Faser mit photonischen Schichten ist, die eine Hülle aus hohlen Kapillarfasern aufweist, oder die Faser eine Struktur mit Bandabstand aufweist oder die Faser eine breite Modusgröße aufweist.

6. Verstärker mit einer strahlungsresistenten Glasfaser, der eine Glasfaser gemäß einem der Ansprüche 1 bis 5 aufweist.

7. Strahlungsresistenter Faserlaser, der eine Glasfaser gemäß einem der Ansprüche 1 bis 5 aufweist.

8. Verfahren zur Strahlungshärtung einer Glasfaser, die einen Kern mit einer Phosphorsilikat-Matrix aufweist, wobei der Kern Erbium-Ytterbium-dotiert ist, wobei die Erbiumkonzentration zwischen 100 und 1000 ppm, die Ytterbiumkonzentration zwischen 500 und 10000 ppm und das Konzentrationsverhältnis Yb/Er im Kern der Faser zwischen 5 und 50 beträgt, **dadurch gekennzeichnet, daß** die Phosphorkonzentration zwischen 2 und 10 Atomprozent beträgt und daß es einen Schritt des Kodotierens des Kerns der Faser mit Cer aufweist, wobei die Cerkonzentration zwischen 500 und 10000 ppm beträgt und das Verhältnis von Erbiumkonzentration zu Cerkonzentration (Er/Ce) im Kern der Faser zwischen 0,05 und 50 beträgt.

9. Verfahren gemäß Anspruch 8, **dadurch gekennzeichnet, daß** es einen zusätzlichen Schritt des Kodotierens des Kerns (1) und/oder der Hülle (2, 3) der Faser mit Fluor aufweist.

10. Verfahren gemäß einem der Ansprüche 8 oder 9, **dadurch gekennzeichnet, daß** einen zusätzlichen Schritt der Hydrierung der Glasfaser aufweist.

11. Verfahren zum Herstellen einer aktiven, strahlungsresistenten optischen Vorrichtung unter Verwendung einer Glasfaser gemäß einem der Ansprüche 1 bis 5.

12. Verfahren gemäß Anspruch 11, **dadurch gekennzeichnet, daß** die optische Vorrichtung unter einem Verstärker mit seltenerddotierter Glasfaser, einem Faserlaser, einer Breitbandquelle ausgewählt wird.

## Claims

1. A radiation-resistant optical fiber which is resistant to ionizing radiations comprising:
- at least one core (1) and
- at least one first cladding (2) surrounding said core (1),
**characterized in that**:
- said core (1) comprises a phosphosilicate matrix, the phosphorus concentration is comprised between 2 and 10 atomic %,
- said core (1) is erbium-ytterbium codoped, the erbium concentration is comprised between 100 and 1000 ppm, the ytterbium concentration is comprised between 500 and 10000 ppm and the ratio of the concentrations Yb/Er in the core of the fiber is comprised between 5 and 50,
and **in that**
- said core (1) is codoped with cerium, the cerium concentration is comprised between 500 and 10000 ppm, and the ratio between the erbium concentration and the cerium concentration (Er/Ce) in the fiber core is comprised between 0.05 and 50.

2. The optical fiber according claim 1 **characterized in that** the fiber comprises a second cladding (3) surrounding the first cladding (2).

3. The optical fiber according to one of claims 1 to 2 **characterized in that** the core (1) further comprises hydrogen and/or fluorine.

4. The optical fiber according to one of claims 1 to 3 **characterized in that** the fiber is a polarizing or polarization-maintaining fiber.

5. The optical fiber according to one of claims 1 to 4 **characterized in that** the fiber is a micro-structured fiber or a photonic fiber comprising a cladding made of hollow capillaries or the fiber comprises a bandgap structure, or the fiber is a large-mode-area fiber.

6. A radiation-resistant optical-fiber amplifier comprising an optical fiber according to one of claims 1 to 5.

7. A radiation-resistant fiber laser comprising an optical fiber according to one of claims 1 to 5.

8. A method for radiation-hardening an optical fiber comprising a phosphosilicate-matrix core, said core being erbium-ytterbium codoped, the erbium concentration is comprised between 100 and 1000 ppm, the ytterbium concentration is comprised between 500 and 10000 ppm and the ratio of the concentrations Yb/Er in the core of the fiber is comprised between 5 and 50,
**characterized in that**, the phosphorus concentration is comprised between 2 and 10 atomic %, and **in that** it comprises a step of cerium codoping said core of the optical fiber, the cerium concentration is comprised between 500 and 10000 ppm, and the ratio between the erbium concentration and the cerium concentration (Er/Ce) in the fiber core is comprised between 0.05 and 50.

9. The method according to claim 8 **characterized in that** it comprises an additional step of fluorine codoping the core (1) and/or the cladding (2, 3) of said fiber.

10. The method according to one of claims 8 or 9 **characterized in that** it comprises an additional step of hydrogenating said optical fiber.

11. A method for manufacturing an active, radiation-resistant optical device using a rare-earth-doped optical fiber according to one of claims 1 to 5.

12. The method according to claim 11 **characterized in that** said optical device is chosen from: a rare-earth-doped optical-fiber amplifier, a fiber laser, a wideband source.
